(19) Europäisches Patentamt / European Patent Office / Office européen des brevets

(11) **EP 4 190 587 B1**

(12) **EUROPEAN PATENT SPECIFICATION**

(45) Date of publication and mention
of the grant of the patent:
**26.02.2025 Bulletin 2025/09**

(21) Application number: **22196654.2**

(22) Date of filing: **20.09.2022**

(51) International Patent Classification (IPC):
**B60C 1/00** *(2006.01)*      **B60C 11/00** *(2006.01)*
**B60C 11/03** *(2006.01)*      **C08K 3/04** *(2006.01)*
**C08K 3/36** *(2006.01)*

(52) Cooperative Patent Classification (CPC):
(C-Sets available)
**B60C 11/0066; B60C 1/0016; B60C 11/0304;
B60C 11/033; C08L 9/06;** B60C 2011/0025;
Y02T 10/86                                    (Cont.)

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **02.12.2021   JP 2021196276**

(43) Date of publication of application:
**07.06.2023   Bulletin 2023/23**

(73) Proprietor: **Sumitomo Rubber Industries, Ltd.
Kobe-shi, Hyogo 651-0072 (JP)**

(72) Inventor: **YAMAMOTO, Keisuke
Kobe-shi, Hyogo, 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**EP-A2- 2 452 834      GB-A- 1 588 575
US-A1- 2005 034 797    US-A1- 2011 094 639**

(52) Cooperative Patent Classification (CPC): (Cont.)

C-Sets
**C08L 9/06, C08L 7/00, C08L 9/00, C08L 57/02,**
**C08K 3/36, C08K 3/04;**
**C08L 9/06, C08L 57/02, C08K 3/36;**
**C08L 9/06, C08L 57/02, C08K 3/36, C08K 3/04**

**Description**

TECHNICAL FIELD

The present invention relates to a tire.

BACKGROUND OF THE INVENTION

A pneumatic tire has been required for achieving both grip performance during straight running and grip performance during cornering. JP 2012-158662 A discloses a rubber composition for tire tread that comprises a certain carbon black and has excellent grip performance and peak grip performance from an initial stage of running.
Other known tires are disclosed in the documents EP 2452834 A, GB 1588575 A, US 2005/034797 A and US 2011/094639 A.

SUMMARY OF THE INVENTION

An object of the present invention is to provide a tire having improved overall performance of grip performance during straight running and grip performance during cornering under a high-speed running condition.
As a result of intensive studies, it has been found that the above-described problem can be solved by, in a tire having a tread part in which a mounting direction to a vehicle is designated, dividing the tread part in a tire width direction and setting respective width and respective average values of a loss tangent tan $\delta$ of an inner tread rubber layer forming an end side inside the vehicle when the tire is mounted to the vehicle and an outer tread rubber layer forming an end side outside the vehicle when the tire is mounted to the vehicle within predetermined ranges.
That is, the present invention relates to a tire as defined in claim 1.
According to the present invention, provided is a tire having improved overall performance of grip performance during straight running and grip performance during cornering under a high-speed running condition.

BRIEF DESCRIPTION OF THE DRAWINGS

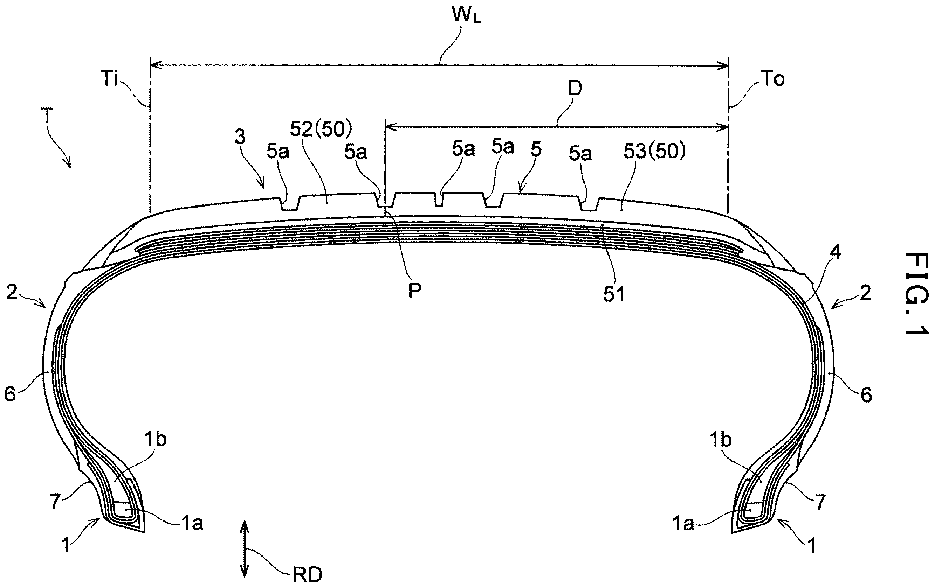

FIG. 1 is a cross-sectional view of a tire according to an embodiment of the present invention.

DETAILED DESCRIPTION

The tire that is one embodiment of the present invention is a tire having a tread part in which a mounting direction to a vehicle is specified, wherein the tread part has an inner tread rubber layer forming an end side inside the vehicle when the tire is mounted to the vehicle and an outer tread rubber layer forming an end side outside the vehicle when the tire is mounted to the vehicle, wherein a ratio of a distance D from a grounding end outside the vehicle to an interface between the inner tread rubber layer and the outer tread rubber layer with respect to a distance $W_L$ between a grounding end inside the vehicle and the grounding end outside the vehicle ($D/W_L$) is 0.50 or more, wherein an average value of a loss tangent tan $\delta$ at 0°C to 50°C of the inner tread rubber layer, measured under a condition of a frequency of 10 Hz, an initial strain of 1%, and an amplitude of $\pm$ 0.1%, is defined as tan $\delta A_{in}$, tan $\delta A_{in}$ is 0.30 or less, and wherein an average value of a loss tangent tan $\delta$ at 0°C to 50°C of the outer tread rubber layer, measured under a condition of a frequency of 10 Hz, an initial strain of 1%, and an amplitude of $\pm$ 0.1%, is defined as tan $\delta A_{out}$, tan $\delta A_{out}$ is 0.40 or more.
When respective width and respective average values of a loss tangent tan $\delta$ of the inner tread rubber layer forming the end side inside the vehicle when the tire is mounted to the vehicle and the outer tread rubber layer forming the end side outside the vehicle when the tire is mounted to the vehicle satisfy the above-described requirements, the obtained tire has improved overall performance of grip performance during straight running and grip performance during cornering under a high-speed running condition. The reason is not intended to be bound by theory, but can be considered as follows.
During straight running at a high speed, the inside of the vehicle widely grounds a road surface. Therefore, during high-speed running such that a surface temperature of the tire becomes 60°C or higher, when a tan $\delta$ is high, rigidity tends to decrease due to heat generation from the rubber, and grip performance in a tire circumferential direction tends to decrease. Here, it is considered that grip performance during straight running can be improved by setting tan $\delta A_{in}$ of the inner tread rubber layer to be smaller than a predetermined value.
On the other hand, during cornering at a high-speed running, the outside of the vehicle mainly touches the ground. Since a lateral force of 1G or more is applied to the tire during cornering at a high-speed running, it is necessary to secure grip performance in a tire width direction during cornering by increasing tan $\delta$ in a temperature range adapted for a tire temperature, heating the rubber to reduce rigidity, and improving followability to the road surface. Here, it is considered that grip performance during cornering can be improved by setting tan $\delta A_{out}$ of the outer tread rubber layer to be larger than a predetermined value.

Furthermore, when the outer tread rubber layer occupies 50% or more of a tread grounding width, the outer tread rubber layer partially touches the ground, thereby adhering thereto in braking during straight running, which easily leads to deceleration in accordance with a high rigidity of the inner tread rubber layer. In addition, during cornering where the outer tread rubber layer becomes easy to touch the ground, compounding of the outer tread rubber layer, which partially generates heat during straight running to reduce rigidity, follows the road surface, so that grip performance against a lateral force can be exhibited from the initial stage of cornering. As such, it is considered that, when the width of the outer tread rubber layer cooperates with the physical properties of the inner tread rubber layer and the outer tread rubber layer, a remarkable effect of being able to improve grip performance during straight running and grip performance during cornering more effectively is achieved.

The rubber composition of the outer tread rubber layer preferably comprises 100 parts by mass or more of carbon black based on 100 parts by mass of the rubber component from the viewpoint of easily obtaining heat generation during cornering and straight running.

The rubber composition of the outer tread rubber layer preferably comprises 70 parts by mass or more of a softening agent based on 100 parts by mass of the rubber component from the viewpoint of followability to the road surface during cornering.

The rubber composition of the outer tread rubber layer preferably comprises an aromatic-based petroleum resin from the viewpoint of generating an adhesive force against the road surface during cornering to enhance grip performance.

The rubber composition of the inner tread rubber layer preferably comprises 40 parts by mass or more of silica based on 100 parts by mass of the rubber component from the viewpoint of securing rigidity during straight running.

A groove area ratio of the grounding surface of the outer tread rubber layer is preferably smaller than a groove area ratio of the grounding surface of the inner tread rubber layer. Moreover, a difference between the groove area ratio of the grounding surface of the outer tread rubber layer and the groove area ratio of the grounding surface of the inner tread rubber layer is preferably 2% or more and 10% or less.

By setting the groove area ratio of the grounding surface of the outer tread rubber layer to be smaller than the groove area ratio of the grounding surface of the inner tread rubber layer, rigidity in a direction outside a vehicle becomes more increased than that in a direction inside the vehicle, and a cornering force ratio (CF ratio) of a rear cornering force to a front cornering force becomes increased, and therefore it is considered that linearity is improved and grip performance is further improved.

According to the invention $\tan \delta A_{out}$ and $D/W_L$ satisfy the following inequality (1):

$$\text{Inequality (1): } \tan \delta A_{out} \times (D/W_L) \geq 0.30$$

By setting the product of $\tan \delta A_{out}$ and $D/W_L$ within the above-described range, the tread rubber can secure good rigidity and grounding area, and also heat generation improves, so that it is considered that the grip performance can be further improved.

<Definition>

A "standardized rim" is a rim defined for each tire in a standard system including a standard, on which the tire is based, by the standard, i.e., a "standard rim" in JATMA, "Design Rim" in TRA, or "Measuring Rim" in ETRTO.

A "standardized internal pressure" is an air pressure defined for each tire in a standard system including a standard on, which the tire is based, by the standard, i.e., a "MAXIMUM AIR PRESSURE" in JATMA, a maximum value described in Table "TIRE LOAD LIMITS AT VARIOUS COLD INFLATION PRESSURES" in TRA, or "INFLATION PRESSURE" in ETRTO.

A "standardized state" is a state where the tire is rim-assembled on a standardized rim, filled with a standardized internal pressure, and even applied with no load. Besides, in the present specification, a dimension of each part of a tire is measured in the above-described standardized state, unless otherwise specified.

A "standardized load" is a load defined for each tire in a standard system including a standard, on which the tire is based, by the standard, i.e., a "MAXIMUM LOAD CAPACITY" in JATMA, a maximum value described in Table "TIRE LOAD LIMITS AT VARIOUS COLD INFLATION PRESSURES" in TRA, or "LOAD CAPACITY" in ETRTO.

A "tread grounding end" is an outermost grounding position on an outer side in a tire width direction when a standardized load is applied to a tire in a standardized state and the tire is grounded on a flat surface at a camber angle of 0 degree.

The "distance D from a grounding end outside the vehicle to an interface between the inner tread rubber layer and the outer tread rubber layer" refers to a straight line distance from a grounding end outside a vehicle on a grounding surface to an extension line of a rubber interface between an inner tread rubber layer and an outer tread rubber layer on a tread surface.

The "groove area ratio" is a ratio of a total area of all grooves to a total surface area of grounding surfaces each formed of an outer tread rubber layer and an inner tread rubber layer divided at an interface, assuming that all the grooves are filled.

An "oil content" also includes an amount of oil contained in the oil-extended rubber.

<Measuring method>

The "groove area ratio" is calculated, in a standardized state, from a grounding shape when a standardized load is applied to press a tread against a flat surface. The grounding shape can be obtained by mounting a tire on a standardize rim and holding a standardize internal pressure, followed by applying an ink to, for example, a tread part, applying a standardize load to press the tread part vertically against a cardboard or the like (camper angle at 0°), and transferring the ink applied to the tread part. Then, by dividing the obtained grounding shape at a dividing interface part of an outer tread rubber layer and an inner tread rubber layer, a groove area ratio of a grounding surface of the outer tread rubber layer and a groove area of a grounding surface of the inner tread rubber layer can be calculated, respectively.

The "tan $\delta$A" can be obtained by measuring a tan $\delta$ at each temperature from 0°C to 50°C in 5°C increments under a condition of a frequency of 10 Hz, an initial strain of 1%, and an amplitude of $\pm$ 0.1%, and calculating an average value of 11 numerical values obtained. A sample for tan $\delta$A measurement is a vulcanized rubber composition with 20 mm in length $\times$ 4 mm in width $\times$ 1 mm in thickness. When it is produced by being cut out from a tire, it is cut out from a tread part of the tire so that a tire circumferential direction becomes a long side and a tire radial direction becomes a thickness direction.

A "styrene content" is a value calculated by 1H-NMR measurement, and is applied to, for example, a rubber component having a repeating unit derived from styrene such as a SBR. A "vinyl content (1,2-bond butadiene unit amount)" is a value calculated by infrared absorption spectrometry according to JIS K 6239-2: 2017, and is applied to, for example, a rubber component having a repeating unit derived from butadiene such as a SBR and a BR. A "cis content (cis-1,4-bond butadiene unit amount)" is a value calculated by infrared absorption spectrometry according to JIS K 6239-2: 2017, and is applied to, for example, a rubber component having a repeating unit derived from butadiene such as a BR.

A "weight-average molecular weight (Mw)" can be calculated in terms of a standard polystyrene based on measurement values obtained by a gel permeation chromatography (GPC) (e.g., GPC-8000 Series manufactured by Tosoh Corporation, detector: differential refractometer, column: TSKGEL SUPERMULTIPORE HZ-M manufactured by Tosoh Corporation). For example, it is applied for a SBR, a BR, and the like.

A "$N_2$SA of carbon black" is measured according to JIS K 6217-2: 2017. An "oil absorption amount of carbon black (DBP oil absorption amount (OAN))" is measured according to JIS K6217-4: 2017.

A "$N_2$SA of silica" is measured by the BET method according to ASTM D3037-93.

A "softening point of a resin component" is a temperature at which a sphere drops when the softening point specified in JIS K 6220-1: 2015 7.7 is measured with a ring and ball softening point measuring device.

A procedure for producing a tire that is one embodiment of the present invention will be described in detail below. However, the following descriptions are illustrative for explaining the present invention, and are not intended to limit the technical scope of the present invention to this description range only.

<Tire>

Hereinafter, the tire according to one embodiment of the present invention will be described with reference to the drawings.

As shown in FIG. 1, a tire T comprises a pair of bead parts 1, sidewall parts 2 extending outward in a tire radial direction RD (vertical direction in FIG. 1, hereinafter, simply referred to as a tire radial direction) from each bead part 1, a tread part 3 connected to outer ends of both sidewall parts 2 in the tire radial direction, and a troidal carcass layer 4 extending from the tread part 3 through the sidewall part 2 to the bead part 1. A bead core 1a and a bead filler 1b are arranged in the bead part 1. The carcass layer 4 is provided between the pair of bead parts 1, is formed of at least one carcass ply, and is locked with its end being wound up via the bead core 1a. A sidewall rubber 6 is provided on the outside of the carcass layer 4 in the sidewall part 2. Moreover, a rim strip rubber 7, which comes into contact with a rim (not shown) when the tire is mounted on the rim, is provided on the outside of the carcass layer 4 in the bead part 1.

In the tire T, a mounting direction with respect to a vehicle is designated, which is displayed on the side of the tire.

The tread part 3 has an outer tread end To and an inner tread end Ti. The outer tread end To is located outside the vehicle (the right side in FIG. 1) when mounted on the vehicle. The inner tread end Ti is located inside the vehicle (the left side in FIG. 1) when mounted on the vehicle. Each of the tread ends To and Ti is in a grounding position on the outermost side in a tire width direction (a left-right direction in FIG. 1) when a standardized load is applied to a tire in a standardized state and the tire grounds a flat surface at a camber angle of 0 degree.

In FIG. 1, the tread part 3 has a cap part 50 forming a grounding surface and a base part 51 provided inside the cap part 50 in the tire radial direction. The cap part 50 has an inner tread rubber layer 52 forming an inner end side of a vehicle and an outer tread rubber layer 53 forming an outer end side of the vehicle when mounted on the vehicle. A wing rubber may be provided outside the inner tread rubber layer 52 and the outer tread rubber layer 53. Besides, when the wing rubber is provided, or when the sidewall part is in a form of covering the outside of the tread in the radial direction, they shall not be applicable to the inner tread rubber and the outer tread rubber even if they form a grounding surface. An interface P between the inner tread rubber layer and the outer tread rubber layer from the grounding end outside the vehicle is placed below a circumferential groove 5a in FIG. 1, but it is not limited to such an embodiment, and it may be placed below a land part 5. Besides, the "land part" refers to a region partitioned by a plurality of circumferential grooves 5a extending continuously to tread grounding ends To, Ti and in a tire circumferential direction in the tread part 3.

A ratio of a distance D from the grounding end of the outer tread end To to the interface P between the inner tread rubber layer and the outer tread rubber layer with respect to a distance $W_L$ between grounding ends of the outer tread end To and the inner tread end Ti ($D/W_L$) is 0.50 or more, preferably 0.52 or more, more preferably 0.54 or more, further preferably 0.56 or more, particularly preferably 0.58 or more. When $D/W_L$ is within the above-described ranges, the outer tread rubber layer partially touches the ground, thereby adhering thereto in braking during straight running, which easily leads to deceleration in accordance with a high rigidity of the inner tread rubber layer. In addition, during cornering where the outer tread rubber layer becomes easy to touch the ground, compounding of the outer tread rubber layer, which partially generates heat during straight running to reduce rigidity, follows the road surface, so that grip performance against a lateral force can be exhibited from the initial stage of cornering. Furthermore, $D/W_L$ is preferably 0.90 or less, more preferably 0.88 or less, further preferably 0.86 or less, particularly preferably 0.84 or less, from the viewpoint of effects of the present invention.

The groove area ratio of the grounding surface of the outer tread rubber layer is preferably smaller than a groove area ratio of the grounding surface of the inner tread rubber layer. By setting the groove area ratio of the grounding surface of the outer tread rubber layer to be smaller than the groove area ratio of the grounding surface of the inner tread rubber layer, rigidity in a direction outside a vehicle becomes more increased than that in a direction inside the vehicle, and a cornering force ratio (CF ratio) of a rear cornering force to a front cornering force becomes increased, and therefore it is considered that linearity is improved and grip performance is further improved.

The groove area ratio of the grounding surface of the outer tread rubber layer is preferably 5% or more, more preferably 10% or more, further preferably 15% or more. Moreover, the groove area ratio of the grounding surface of the outer tread rubber layer is preferably 40% or less, more preferably 35% or less, further preferably 30% or less.

The groove area ratio of the grounding surface of the inner tread rubber layer is preferably 8% or more, more preferably 12% or more, further preferably 18% or more. Moreover, the groove area ratio of the grounding surface of the inner tread rubber layer is preferably 45% or less, more preferably 40% or less, further preferably 35% or less.

The difference between the groove area ratio of the grounding surface of the outer tread rubber layer and the groove area ratio of the grounding surface of the inner tread rubber layer is preferably 2% or more and 10% or less, more preferably 3% or more and 9% or less, further preferably 4% or more and 8% or less, from the viewpoint of the effects of the present invention.

The tan $\delta A_{in}$ of the inner tread rubber layer is 0.30 or less, preferably 0.28 or less, more preferably 0.26 or less, further preferably 0.24 or less. By setting tan $\delta A_{in}$ within the above-described ranges, a decrease in rigidity of the inner tread rubber layer can be suppressed, and grip performance during straight running can be further improved. Moreover, tan $\delta A_{in}$ is preferably 0.06 or more, more preferably 0.08 or more, further preferably 0.10 or more, particularly preferably 0.12 or more, from the viewpoint of grip performance.

The tan $\delta A_{out}$ of the outer tread rubber layer is 0.40 or more, preferably 0.42 or more, more preferably 0.44 or more, further preferably 0.46 or more. By setting tan $\delta A_{out}$ within the above-described ranges, grip performance during cornering can be further improved. Moreover, tan $\delta A_{out}$ is preferably 0.90 or less, more preferably 0.80 or less, further preferably 0.70 or less, from the viewpoint of fuel efficiency.

Besides, tan $\delta A$ of the rubber composition can be appropriately adjusted depending on types and compounding amounts of rubber components, fillers, softening agents, etc. which will be described later.

The product of tan $\delta A_{out}$ and $D/W_L$ represented by the inequality (1) is preferably 0.20 or more, more preferably 0.24 or more, further preferably 0.27 or more, further preferably 0.30 or more, particularly preferably 0.33 or more. By setting the product of tan $\delta A_{out}$ and $D/W_L$ within the above-described range, the tread rubber can secure good rigidity and grounding area, and also heat generation improves, so that it is considered that the grip performance can be further improved. Moreover, the product of tan $\delta A_{out}$ and $D/W_L$ is preferably 0.80 or less, more preferably 0.70 or less, further preferably 0.65 or less.

[Rubber composition]

In the tire of the present disclosure, when the width of the outer tread rubber layer 53 cooperates with the physical properties of the rubber compositions of the cap part 50 comprising the inner tread rubber layer 52 and the outer tread rubber layer 53, grip performance during straight running and grip performance during cornering can be improved more effectively.

<Rubber component>

A diene-based rubber is appropriately used as the rubber component for each of the rubber compositions of the inner tread rubber layer 52 and the outer tread rubber layer 53 (hereinafter, referred to as the rubber composition). A content of the diene-based rubber in the rubber component is preferably 80% by mass or more, more preferably 85% by mass or more, further preferably 90% by mass or more, particularly preferably 95% by mass or more, from the viewpoint of the effects of the present invention. Moreover, the rubber component may be one consisting of a diene-based rubber.

Examples of the diene-based rubber include, for example, an isoprene rubber, a butadiene rubber (BR), a styrene-butadiene rubber (SBR), a styrene-isoprene rubber (SIR), a styrene-isoprene-butadiene rubber (SIBR), a chloroprene rubber (CR), an acrylonitrile-butadiene rubber (NBR), and the like. These diene-based rubbers may be used alone, or two or more thereof may be used in combination. Among them, it is preferable to comprise at least one selected from the group consisting of an isoprene-based rubber, a BR, and a SBR, and it is more preferable to comprise a SBR.

(SBR)

The SBR is not particularly limited, examples of which include an unmodified solution-polymerized SBR (S-SBR) and an emulsion-polymerized SBR (E-SBR), modified SBRs (a modified S-SBR, a modified E-SBR) thereof, and the like. Examples of the modified SBR include a SBR modified at its terminal and/or main chain, a modified SBR coupled with tin, a silicon compound, etc. (a modified SBR of condensate or having a branched structure, etc.), and the like. Among them, a S-SBR and a modified SBR are preferable. Furthermore, hydrogenated ones of these SBRs (hydrogenated SBRs) and the like can also be used.

The SBRs listed above may be used alone, or two or more thereof may be used in combination. As the SBRs listed above, for example, those commercially available from Sumitomo Chemical Co., Ltd., JSR Corporation, Asahi Kasei Corporation, Zeon Corporation, ZS Elastomer Co., Ltd., etc. can be used.

A styrene content of the SBR is preferably 10% by mass or more, more preferably 15% by mass or more, further preferably 20% by mass or more, particularly preferably 25% by mass or more, from the viewpoints of grip performance and abrasion resistance. Moreover, it is preferably 60% by mass or less, more preferably 55% by mass or less, further preferably 50% by mass or less, from the viewpoints of temperature dependence of grip performance and blow resistance. Besides, the styrene content of the SBR is measured by the above-described measuring method.

A vinyl content of the SBR is preferably 10 mol% or more, more preferably 15 mol% or more, further preferably 20 mol% or more, from the viewpoints of ensuring reactivity with silica, grip performance, and abrasion resistance. Moreover, the vinyl content of the SBR is preferably 70 mol% or less, more preferably 65 mol% or less, further preferably 60 mol% or less, from the viewpoints of prevention of increase in temperature dependence, elongation at break, and abrasion resistance. Besides, the vinyl content of the SBR is measured by the above-described measuring method.

A weight-average molecular weight (Mw) of the SBR is preferably 200,000 or more, more preferably 250,000 or more, from the viewpoint of grip performance. Moreover, the weight-average molecular weight is preferably 2,000,000 or less, more preferably 1,800,000 or less, further preferably 1,500,000 or less, from the viewpoint of cross-linking uniformity. Besides, the weight-average molecular weight of the SBR is measured by the above-described measuring method.

A content of the SBR when compounded in the rubber component is preferably 30% by mass or more, more preferably 40% by mass or more, further preferably 50% by mass or more, further preferably 60% by mass or more, particularly preferably 70% by mass or more, from the viewpoint of grip performance. Moreover, an upper limit value of the content of the SBR is not particularly limited and may be 100% by mass.

(BR)

The BR is not particularly limited, and those common in the tire industry can be used such as, for example, a BR having a cis content of less than 50 mol% (a low cis BR), a BR having a cis content of 90 mol% or more (a high cis BR), a rare-earth-based butadiene rubber synthesized using a rare-earth element-based catalyst (a rare-earth-based BR), a BR containing a syndiotactic polybutadiene crystal (a SPB-containing BR), and a modified BR (a high cis modified BR, a low cis modified BR). These BRs may be used alone, or two or more thereof may be used in combination. Besides, the cis content of the BR is measured by the above-described measuring method.

As the high cis BR, for example, those commercially available from Zeon Corporation, Ube Industries, Ltd., JSR Corporation, etc. can be used. When the high cis BR is compounded, low temperature characteristics and abrasion resistance can be improved. A cis content of the high cis BR is preferably 95 mol% or more, more preferably 96 mol% or more, further preferably 97 mol% or more, particularly preferably 98 mol% or more. Besides, the cis content of the BR is measured by the above-described measuring method.

A weight-average molecular weight (Mw) of the BR is preferably 300,000 or more, more preferably 350,000 or more, further preferably 400,000 or more, from the viewpoint of abrasion resistance. Moreover, it is preferably 2,000,000 or less, more preferably 1,500,000 or less, further preferably 1,000,000 or less, from the viewpoints of cross-linking uniformity and the like. Besides, the Mw of the BR is measured by the above-described measuring method.

A content of the BR when compounded in the rubber component is preferably 1% by mass or more, more preferably 3% by mass or more, further preferably 5% by mass or more, particularly preferably 7% by mass or more, from the viewpoint of grip performance. Moreover, the content of the BR is preferably 50% by mass or less, more preferably 40% by mass or less, further preferably 30% by mass or less, particularly preferably 25% by mass or less.

(Isoprene-based rubber)

Examples of the isoprene-based rubber include a natural rubber (NR), an isoprene rubber (IR), a purified NR, a modified NR, a modified IR, and the like. As the NR, those common in the tire industry such as, for example, SIR20, RSS#3, and TSR20 can be used. The IR is not particularly limited, and those common in the tire industry such as, for example, IR2200 can be used. Examples of the purified NR include a deproteinized natural rubber (DPNR), an ultra pure natural rubber, and the like, examples of the modified NR include an epoxidized natural rubber (ENR), a hydrogenated natural rubber (HNR), a grafted natural rubber, and the like, and examples of the modified IR include an epoxidized isoprene rubber, a hydrogenated isoprene rubber, a grafted isoprene rubber, and the like. These isoprene-based rubbers may be used alone, or two or more thereof may be used in combination.

A content of the isoprene-based rubber when compounded in the rubber component is preferably 50% by mass or less, more preferably 40% by mass or less, further preferably 35% by mass or less, from the viewpoint of grip performance. Moreover, a lower limit value of the content can be, but not particularly limited to, for example, 1% by mass or more, 3% by mass or more, 5% by mass or more, or 10% by mass or more.

(Other rubber components)

The rubber component may comprise rubber components other than diene-based rubbers as long as they do not affect the effects of the present invention. As other rubber components, cross-linkable rubber components commonly used in the tire industry can be used, examples of which include, for example, a butyl rubber (IIR), a halogenated butyl rubber, an ethylene-propylene rubber, a polynorbornene rubber, a silicone rubber, a polyethylene chloride rubber, a fluorine rubber (FKM), an acrylic rubber (ACM), a hydrin rubber, and the like. These other rubber components may be used alone, or two or more thereof may be used in combination. Moreover, besides the above-described rubber components, the rubber component may or may not comprise a known thermoplastic elastomer.

<Filler>

It is more preferable that the rubber composition of the present disclosure comprises carbon black and/or silica as a filler. The rubber composition of the outer tread rubber layer preferably comprises carbon black as a filler. The rubber composition of the inner tread rubber layer preferably comprises silica as a filler, and more preferably comprises silica and carbon black.

(Silica)

Silica is not particularly limited, and those common in the tire industry can be used, such as, for example, silica prepared by a dry process (anhydrous silica) and silica prepared by a wet process (hydrous silica). Among them, hydrous silica prepared by a wet process is preferable from the reason that it has many silanol groups. Besides, in addition to the above-described silica, silica made of a biomass material as a raw material such as rice husks may be used as appropriate. These silica may be used alone, or two or more thereof may be used in combination.

A nitrogen adsorption specific surface area ($N_2SA$) of silica is preferably 100 $m^2$/g or more, more preferably 120 $m^2$/g or more, further preferably 140 $m^2$/g or more, particularly preferably 160 $m^2$/g or more, from the viewpoint of securing reinforcing property and grip performance. Moreover, it is preferably 350 $m^2$/g or less, more preferably 300 $m^2$/g or less, further preferably 250 $m^2$/g or less, from the viewpoints of heat generation and processability. Besides, the $N_2SA$ of silica is measured by the above-described measuring method.

A content of silica when compounded in the rubber composition of the inner tread rubber layer based on 100 parts by mass of the rubber component is preferably 40 parts by mass or more, more preferably 60 parts by mass or more, further preferably 80 parts by mass or more, particularly preferably 90 parts by mass or more, from the viewpoint of securing rigidity during straight running. Moreover, the content of silica based on 100 parts by mass of the rubber component is preferably 150 parts by mass or less, more preferably 140 parts by mass or less, further preferably 130 parts by mass or less, from the viewpoint of reducing the specific gravity of the rubber to reduce the weight. Besides, a content of silica when compounded in the rubber composition of the outer tread rubber layer based on 100 parts by mass of the rubber component is not particularly limited as long as the $\tan \delta A_{out}$ is 0.40 or more.

(Carbon black)

Carbon black is not particularly limited, and, for example, those commonly used in the tire industry such as GPF, FEF, HAF, ISAF, and SAF can be used. Besides, in addition to carbon black produced by burning a general mineral oil, carbon black using a biomass material such as lignin may be used. These carbon black may be used alone, or two or more thereof may be used in combination.

A nitrogen adsorption specific surface area ($N_2$SA) of carbon black is preferably 50 m$^2$/g or more, more preferably 70 m$^2$/g or more, further preferably 100 m$^2$/g or more, particularly preferably 120 m$^2$/g or more, from the viewpoints of reinforcing property and grip performance. Moreover, it is preferably 250 m$^2$/g or less, more preferably 220 m$^2$/g or less, from the viewpoint of dispersibility. Besides, the $N_2$SA of carbon black is measured by the above-described measuring method.

An oil absorption amount (DBP oil absorption amount (OAN)) of carbon black is preferably 85 mL/100 g or more, more preferably 90 mL/100 g or more, further preferably 100 mL/100 g or more, from the viewpoints of reinforcing property and grip performance. Moreover, the OAN is preferably 250 mL/100 g or less, more preferably 225 mL/100 g or less, further preferably 200 mL/100 g or less, from the viewpoint of grip performance. Besides, the OAN of carbon black is measured by the above-described measuring method.

A content of carbon black when compounded in the rubber composition of the outer tread rubber layer based on 100 parts by mass of the rubber component is preferably 60 parts by mass or more, more preferably 80 parts by mass or more, further preferably 100 parts by mass or more, particularly preferably 110 parts by mass or more, from the viewpoint of easily obtaining heat generation during cornering and during straight running. A content of carbon black when compounded in the rubber composition of the inner tread rubber layer based on 100 parts by mass of the rubber component is preferably 1 part by mass or more, more preferably 3 parts by mass or more, further preferably 5 parts by mass or more, particularly preferably 10 parts by mass or more, from the viewpoints of weather resistance and reinforcing property. Moreover, a content of carbon black based on 100 parts by mass of the rubber component is preferably 160 parts by mass or less, more preferably 150 parts by mass or less, further preferably 140 parts by mass or less, from the viewpoint of fuel efficiency.

(Other fillers)

As fillers other than silica and carbon black, those commonly used in the tire industry can be compounded, such as aluminum hydroxide, calcium carbonate, alumina, clay, and talc. In addition to these fillers, biochar may be used as appropriate.

A total content of fillers based on 100 parts by mass of the rubber component is preferably 60 parts by mass or more, more preferably 80 parts by mass or more, further preferably 100 parts by mass or more, particularly preferably 110 parts by mass or more, from the viewpoints of reinforcing property and grip performance. Moreover, it is preferably 160 parts by mass or less, more preferably 150 parts by mass or less, further preferably 140 parts by mass or less, from the viewpoint of dispersibility.

(Silane coupling agent)

Silica is preferably used in combination with a silane coupling agent. The silane coupling agent is not particularly limited, and any silane coupling agent conventionally used in combination with silica in the tire industry can be used, examples of which include, for example, mercapto-based silane coupling agents such as 3-mercaptopropyltrimethoxysilane, 3-mercaptopropyltriethoxysilane, 2-mercaptoethyltrimethoxysilane, and 2-mercaptoethyltriethoxysilane; sulfide-based silane coupling agents such as bis(3-triethoxysilylpropyl)disulfide and bis(3-triethoxysilylpropyl)tetrasulfide; thioester-based silane coupling agents such as 3-octanoylthio-1-propyltriethoxysilane, 3-hexanoylthio-1-propyltriethoxysilane, and 3-octanoylthio-1-propyltrimethoxysilane; vinyl-based silane coupling agents such as vinyltriethoxysilane and vinyltrimethoxysilane; amino-based silane coupling agents such as 3-aminopropyltriethoxysilane, 3-aminopropyltrimethoxysilane, and 3-(2-aminoethyl)aminopropyltriethoxysilane; glycydoxy-based silane coupling agents such as $\gamma$-glycidoxypropyltriethoxysilane and $\gamma$-glycidoxypropyltrimethoxysilane; nitro-based silane coupling agents such as 3-nitropropyltrimethoxysilane and 3-nitropropyltriethoxysilane; chloro-based silane coupling agents such as 3-chloropropyltrimethoxysilane and 3-chloropropyltriethoxysilane; and the like. Among them, sulfide-based silane coupling agents and/or mercapto-based silane coupling agents are preferably compounded. As silane coupling agents, for example, those commercially available from Momentive Performance Materials, etc. can be used. These silane coupling agents may be used alone, or two or more thereof may be used in combination.

A total content of silane coupling agents when compounded based on 100 parts by mass of the rubber component is preferably 0.5 parts by mass or more, more preferably 1.0 part by mass or more, further preferably 2.0 parts by mass or more, particularly preferably 4.0 parts by mass or more, from the viewpoint of enhancing dispersibility of silica. Moreover, it is preferably 20 parts by mass or less, more preferably 15 parts by mass or less, further preferably 12 parts by mass or less, from the viewpoint of preventing deterioration of abrasion resistance.

<Softening agent>

The rubber composition preferably comprises a softening agent. Examples of the softening agent include, for example, a resin component, oil, a liquid rubber, an ester-based plasticizing agent, and the like.

(Resin component)

The resin component is not particularly limited, examples of which include a petroleum resin, a terpene-based resin, a rosin-based resin, a phenol-based resin, and the like, which are commonly used in the tire industry. These resin components may be used alone, or two or more thereof may be used in combination. An aromatic-based petroleum resin is appropriately used for the rubber composition of the outer tread rubber layer from the viewpoint of generating an adhesive force on a road surface during cornering to enhance grip performance.

In the present specification, a "C5-based petroleum resin" refers to a resin obtained by polymerizing a C5 fraction. Examples of the C5 fraction include, for example, a petroleum fraction having 4 to 5 carbon atoms such as cyclopentadiene, pentene, pentadiene, and isoprene. As the C5-based petroleum resin, a dicyclopentadiene resin (DCPD resin) is appropriately used.

In the present specification, the "aromatic-based petroleum resin" refers to a resin obtained by polymerizing a C9 fraction, and may be hydrogenated or modified. Examples of the C9 fraction include, for example, a petroleum fraction corresponding to 8 to 10 carbon atoms such as vinyltoluene, alkylstyrene, indene, and methyl indene. As specific examples of the aromatic-based petroleum resin, for example, a coumarone indene resin, a coumarone resin, an indene resin, and an aromatic vinyl-based resin are appropriately used. As the aromatic vinyl-based resin, a homopolymer of $\alpha$-methylstyrene or styrene or a copolymer of $\alpha$-methylstyrene and styrene is preferable, and a copolymer of $\alpha$-methylstyrene and styrene is more preferable, because it is economical, easy to process, and excellent in heat generation. As the aromatic vinyl-based resin, for example, those commercially available from Kraton Corporation, Eastman Chemical Company, Mitsui Chemicals, Inc., etc. can be used.

In the present specification, a "C5-C9-based petroleum resin" refers to a resin obtained by copolymerizing the C5 fraction and the C9 fraction, and may be hydrogenated or modified. Examples of the C5 fraction and the C9 fraction include the above-described petroleum fractions. As the C5-C9-based petroleum resin, those commercially available from, for example, Tosoh Corporation, Zibo Luhua Hongjin New Material Co., Ltd., etc. can be appropriately used.

Examples of the terpene-based resin include a polyterpene resin consisting of at least one selected from terpene compounds such as $\alpha$-pinene, $\beta$-pinene, limonene, and a dipentene; an aromatic-modified terpene resin made from the terpene compound and an aromatic compound; a terpene phenol resin made from a terpene compound and a phenol-based compound; and those in which these terpene-based resins are hydrogenated (hydrogenated terpene-based resins). Examples of the aromatic compound used as a raw material for the aromatic-modified terpene resin include, for example, styrene, $\alpha$-methylstyrene, vinyltoluene, a divinyltoluene, and the like. Examples of the phenol-based compound used as a raw material for the terpene phenol resin include, for example, phenol, bisphenol A, cresol, xylenol, and the like.

Example of the rosin-based resin include, but not particularly limited to, for example, a natural resin rosin and a rosin-modified resin obtained by modifying it by hydrogenation, disproportionation, dimerization, esterification, or the like.

Examples of the phenol-based resin include, but not particularly limited to, a phenol formaldehyde resin, an alkylphenol formaldehyde resin, an alkylphenol acetylene resin, an oil-modified phenol formaldehyde resin, and the like.

A softening point of the resin component is preferably 60°C or higher, more preferably 70°C or higher, further preferably 80°C or higher, from the viewpoint of grip performance. Moreover, it is preferably 150°C or lower, more preferably 140°C or lower, further preferably 130°C or lower, from the viewpoints of processability and improvement in dispersibility of a rubber component with a filler. Besides, the softening point of the resin component is measured by the above-described measuring method.

A content of the resin component when compounded based on 100 parts by mass of the rubber component is preferably 15 parts by mass or more, more preferably 20 parts by mass or more, further preferably 25 parts by mass or more, particularly preferably 30 parts by mass or more, from the viewpoint of grip performance. Moreover, it is preferably 100 parts by mass or less, more preferably 90 parts by mass or less, further preferably 80 parts by mass or less, from the viewpoint of suppressing heat generation.

(Oil)

Examples of oil include, for example, a process oil, vegetable fats and oils, animal fats and oils, and the like. Examples of the process oil include a paraffin-based process oil, a naphthene-based process oil, an aroma-based process oil, and the like. Moreover, as an environmental measure, a process oil having a low content of a polycyclic aromatic compound (PCA) can also be used. Examples of the process oil having a low content of a PCA include a mild extraction solution (MES), a treated distillate aromatic extract (TDAE), a heavy naphthenic oil, and the like. In addition, a waste oil after used with a rubber mixer or an engine, or a refined waste cooking oil used in a cooking store may be used, from the viewpoint of life cycle assessment.

A content of oil when compounded based on 100 parts by mass of the rubber component is preferably 10 parts by mass or more, more preferably 20 parts by mass or more, further preferably 30 parts by mass or more, particularly preferably 40 parts by mass or more, from the viewpoint of processability. Moreover, it is preferably 120 parts by mass or less, more preferably 100 parts by mass or less, further preferably 80 parts by mass or less, particularly preferably 70 parts by mass or less, from the viewpoint of abrasion resistance.

(Liquid rubber)

The liquid rubber is not particularly limited as long as it is a polymer in a liquid state at a normal temperature (25°C), examples of which include, for example, a liquid butadiene rubber (a liquid BR), a liquid styrene-butadiene rubber (a liquid SBR), a liquid isoprene rubber (a liquid IR), a liquid styrene-isoprene rubber (a liquid SIR), a liquid farnesene rubber, and the like. These liquid rubbers may be used alone, or two or more thereof may be used in combination.

A content of the liquid rubber when compounded based on 100 parts by mass of the rubber component is preferably 1 part by mass or more, more preferably 5 parts by mass or more, further preferably 10 parts by mass or more. Moreover, the content of the liquid rubber is preferably 80 parts by mass or less, more preferably 70 parts by mass or less, further preferably 60 parts by mass or less.

(Ester-based plasticizing agent)

Examples of the ester-based plasticizing agent include, for example, dibutyl adipate (DBA), diisobutyl adipate (DIBA), dioctyl adipate (DOA), bis(2-ethylhexyl) azelate (DOZ), dibutyl sebacate (DBS), diisononyl adipate (DINA), diethyl phthalate (DEP), dioctyl phthalate (DOP), diundecyl phthalate (DUP), dibutyl phthalate (DBP), dioctyl sebacate (DOS), tributyl phosphate (TBP), trioctyl phosphate (TOP), triethyl phosphate (TEP), trimethyl phosphate (TMP), thymidine triphosphate (TTP), tricresyl phosphate (TCP), trixylenyl phosphate (TXP), and the like. These ester-based plasticizing agents may be used alone, or two or more thereof may be used in combination.

A content of the ester-based plasticizing agent when compounded based on 100 parts by mass of the rubber component is preferably 1 part by mass or more, more preferably 5 parts by mass or more, further preferably 10 parts by mass or more. Moreover, the content of the ester-based plasticizing agent is preferably 50 parts by mass or less, more preferably 40 parts by mass or less, further preferably 30 parts by mass or less.

A content of the softening agent based on 100 parts by mass of the rubber component (a total amount of a plurality of softening agents when used in combination) is preferably 50 parts by mass or more, more preferably 70 parts by mass or more, further preferably 90 parts by mass or more, particularly preferably 100 parts by mass or more, from the viewpoint of followability to a road surface during cornering. Moreover, it is preferably 180 parts by mass or less, more preferably 170 parts by mass or less, further preferably 160 parts by mass or less, particularly preferably 150 parts by mass or less, from the viewpoint of processability.

(Other compounding agents)

The rubber composition can appropriately comprise compounding agents conventionally and generally used in the tire industry, for example, wax, processing aid, an antioxidant, stearic acid, zinc oxide, a vulcanizing agent, a vulcanization accelerator, and the like, in addition to the above-described components.

A content of wax when compounded based on 100 parts by mass of the rubber component is preferably 0.5 parts by mass or more, more preferably 1.0 part by mass or more, further preferably 1.5 parts by mass or more, from the viewpoint of weather resistance of a rubber. Moreover, it is preferably 10 parts by mass or less, more preferably 5.0 parts by mass or less, from the viewpoint of preventing whitening of a tire due to bloom.

Examples of the antioxidant include, but not particularly limited to, for example, amine-based, quinoline-based, quinone-based, phenol-based, and imidazole-based compounds, and a carbamic acid metal salt, preferably, phenylenediamine-based antioxidants such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, and quinoline-based antioxidants such as 2,2,4-trimethyl-1,2-dihydroquinoline polymer and 6-ethoxy-2,2,4-trimethyl-1,2-dihydroquinoline. These antioxidants may be used alone, or two or more thereof may be used in combination.

A content of the antioxidant when compounded based on 100 parts by mass of the rubber component is preferably 0.5 parts by mass or more, more preferably 1.0 part by mass or more, further preferably 1.5 parts by mass or more, from the viewpoint of ozone crack resistance of a rubber. Moreover, it is preferably 10 parts by mass or less, more preferably 5.0 parts by mass or less, from the viewpoints of abrasion resistance and wet grip performance.

A content of stearic acid when compounded based on 100 parts by mass of the rubber component is preferably 0.5 parts by mass or more, more preferably 1.0 part by mass or more, further preferably 1.5 parts by mass or more, from the viewpoint of processability. Moreover, it is preferably 10 parts by mass or less, more preferably 5.0 parts by mass or less, from the viewpoint of vulcanization rate.

A content of zinc oxide when compounded based on 100 parts by mass of the rubber component is preferably 0.5 parts by mass or more, more preferably 1.0 part by mass or more, further preferably 1.5 parts by mass or more, from the viewpoint of processability. Moreover, it is preferably 10 parts by mass or less, more preferably 5.0 parts by mass or less, from the viewpoint of abrasion resistance.

Sulfur is appropriately used as a vulcanizing agent. As sulfur, a powdery sulfur, oil a processing sulfur, a precipitated sulfur, a colloidal sulfur, an insoluble sulfur, a highly dispersible sulfur, and the like can be used.

A content of sulfur when compounded based on 100 parts by mass of the rubber component is preferably 0.1 parts by mass or more, more preferably 0.3 parts by mass or more, further preferably 0.5 parts by mass or more, from the viewpoint of securing a sufficient vulcanization reaction. Moreover, it is preferably 5.0 parts by mass or less, more preferably 4.0 parts by mass or less, further preferably 3.0 parts by mass or less, particularly preferably 2.5 parts by mass or less, from the viewpoint of preventing deterioration. Besides, a content of the vulcanizing agent when an oil-containing sulfur is used as the cross-linking agent shall be a total content of pure sulfur comprised in the oil-containing sulfur.

As vulcanizing agents other than sulfur, known organic cross-linking agents can also be used. When an organic cross-linking agent is compounded, a distance between cross-linking points becomes longer than that of cross-linking with sulfur, allowing for a large amount of energy loss to be generated, and therefore a good peak grip performance can be obtained.

The organic cross-linking agent is not particularly limited as long as it can form cross-linked chains other than a polysulfide bond, examples of which, include, for example, an alkylphenol-sulfur chloride condensate, sodium hexamethylene-1,6-bisthiosulfate dihydrate, 1,6-bis(N,N'-dibenzylthiocarbamoyldithio)hexane, dicumylperoxide, and the like.

Examples of the vulcanization accelerator include, for example, a sulfenamide-based vulcanization accelerator, a thiazole-based vulcanization accelerator, a thiuram-based vulcanization accelerator, a guanidine-based vulcanization accelerator, a dithiocarbamate-based vulcanization accelerator, a caprolactam disulfide, and the like. These vulcanization accelerators may be used alone, or two or more thereof may be used in combination. Among them, one or more vulcanization accelerators selected from the group consisting of a sulfenamide-based vulcanization accelerator, a guanidine-based vulcanization accelerator, and a dithiocarbamate-based vulcanization accelerator are preferable, and it is more preferable to use a sulfenamide-based vulcanization accelerator and a dithiocarbamate-based vulcanization accelerator in combination, from the viewpoint that the desired effects can be obtained more appropriately.

Examples of the sulfenamide-based vulcanization accelerator include, for example, N-tert-butyl-2-benzothiazolylsulfenamide (TBBS), N-cyclohexyl-2-benzothiazolylsulfenamide (CBS), N,N-dicyclohexyl-2-benzothiazolylsulfenamide (DCBS), and the like. Among them, TBBS and CBS are preferable.

Examples of the thiazole-based vulcanization accelerator include, for example, 2-mercaptobenzothiazole (MBT) or a salt thereof, di-2-benzothiazolyl disulfide (MBTS), 2-(2,4-dinitrophenyl)mercaptobenzothiazole, 2-(2,6-diethyl-4-morpholinothio)benzothiazole, and the like. Among them, MBTS and MBT are preferable, and MBTS is more preferable.

Examples of the guanidine-based vulcanization accelerator include, for example, 1,3-diphenylguanidine (DPG), 1,3-di-o-tolylguanidine, 1-o-tolylbiguanide, di-o-tolylguanidine salt of dicatecholborate, 1,3-di-o-cumenylguanidine, 1,3-di-o-biphenylguanidine, 1,3-di-o-cumenyl-2-propionylguanidine, and the like. Among them, DPG is preferable.

Examples of the dithiocarbamate-based vulcanization accelerator include, for example, piperidinium pentamethylene dithiocarbamate (PPDC), zinc dimethyldithiocarbamate (ZnMDC), zinc diethyldithiocarbamate (ZnEDC), zinc dibutyldithiocarbamate (ZnBDC), zinc dibenzyldithiocarbamate (ZDBzC), zinc N-ethyl-N-phenyldithiocarbamate (ZnEPDC), zinc N-pentamethylene dithiocarbamate (ZnPDC), sodium dibutyldithiocarbamate (NaBDC), copper dimethyldithiocarbamate (CuMDC), iron dimethyldithiocarbamate (FeMDC), and tellurium diethyldithiocarbamate (TeEDC). Among them, ZnBDC and ZDBzC are preferable.

A content of the vulcanization accelerator when compounded based on 100 parts by mass of the rubber component is preferably 1.0 part by mass or more, more preferably 1.5 parts by mass or more, further preferably 2.0 parts by mass or more. Moreover, the content of the vulcanization accelerator based on 100 parts by mass of the rubber component is preferably 8.0 parts by mass or less, more preferably 7.0 parts by mass or less, further preferably 6.0 parts by mass or less, particularly preferably 5.0 parts by mass or less. When the content of the vulcanization accelerator is within the above-described ranges, breaking strength and elongation tend to be secured.

The rubber composition can be produced by a known method. For example, it can be produced by kneading each of the above-described components using a rubber kneading apparatus such as an open roll and a closed type kneader (Bunbury mixer, kneader, etc.).

The kneading step includes, for example, a base kneading step of kneading compounding agents and additives other than vulcanizing agents and vulcanization accelerators and a final kneading (F kneading) step of adding vulcanizing agents and vulcanization accelerators to the kneaded product obtained by the base kneading step and kneading them. Furthermore, the base kneading step can be divided into a plurality of steps, if desired.

A kneading condition is not particularly limited. Examples of kneading include, for example, in the base kneading step, a method of kneading at a discharge temperature at 150 to 170°C for 3 to 10 minutes, and in the final kneading step, a method of kneading at 70 to 110°C for 1 to 5 minutes. The vulcanization condition is not particularly limited. Examples of vulcanization include, for example, a method of vulcanizing at 150 to 200°C for 10 to 30 minutes.

The tire comprising the tread formed of the above-described rubber composition can be produced by a usual method. That is, the tire can be produced by extruding an unvulcanized rubber composition compounded from the rubber component and other components as necessary into a shape of each rubber layer of a tread, attaching it together with other tire members on a tire forming machine, and molding them by a usual method to form an unvulcanized tire, followed by heating and pressurizing this unvulcanized tire in a vulcanizing machine. The vulcanization condition is not particularly limited. Examples of vulcanization include, for example, a method of vulcanizing at 150 to 200°C for 10 to 30 minutes.

<Application>

The tire of the present invention can be a general-purpose tire such as a tire for a passenger car, a tire for a truck/bus, and a tire for a two-wheeled vehicle, or can be a racing tire. Besides, the tire for a passenger car is a tire on the premise that it is mounted on a car running on four wheels and refers to one having the maximum load capacity of 1000 kg or less. Moreover, the tire of the present invention can be used as an all-season tire, a summer tire, or a winter tire such as a studless tire.

EXAMPLE

Hereinafter, the present invention will be described based on Examples, though the present invention is not limited to these Examples. Examples 1, 2 and 10 are not according to the present invention.

Various chemicals used in Examples and Comparative examples are collectively shown below.

NR: TSR20

SBR1: HP755B manufactured by JSR Corporation (S-SBR, styrene content: 40% by mass, vinyl content: 38 mol%, comprising 37.5 parts by mass of an oil content based on 100 parts by mass of a rubber solid content)

SBR2: Tufdene 4850 manufactured by Asahi Kasei Corporation (unmodified S-SBR, styrene content: 40% by mass, vinyl content: 46 mol%, Mw: 940,000, comprising 50 parts by mass of an oil content based on 100 parts by mass of a rubber solid content)

BR: Ubepol BR (Registered Trademark) 150B manufactured by Ube Industries, Ltd. (cis content: 97 mol%, Mw: 440,000)

Carbon Black: Show Black N330 manufactured by Cabot Japan K.K. ($N_2SA$: 75 $m^2$/g, DBP absorption amount: 102 mL/100 g)

Silica: ZEOSIL 1165MP manufactured by Rhodia ($N_2SA$: 160 $m^2$/g)

Silane coupling agent: Si69 manufactured by Evonik Degussa GmbH (bis(3-triethoxysilylpropyl)tetrasulfide)

Resin component 1: Petrotack 100V manufactured by Tosoh Corporation (C5-C9-based petroleum resin, softening point: 96°C)

Resin component 2: FTR8100 manufactured by Mitsui Chemicals, Inc. (C5-C9-based petroleum resin, softening point: 96°C)

Oil: VivaTec 500 manufactured by H&R Group (TDAE oil)

Liquid rubber: Ricon 100 manufactured by Cray Valley (liquid SBR)

Zinc oxide: Zinc oxide No. 2 manufactured by Mitsui Mining & Smelting Co., Ltd.

Stearic acid: Bead stearic acid "CAMELLIA" manufactured by NOF CORPORATION

Antioxidant: Antigen 6C manufactured by Sumitomo Chemical Co., Ltd. (N-(1,3-dimethylbutyl)-N'-phenyl-p-phenylenediamine)

Wax: SUNNOC N manufactured by Ouchi Shinko Chemical Industry Co., Ltd.

Sulfur: Powdered sulfur manufactured by Karuizawa Sulfur Co, Ltd.

Vulcanization accelerator 1: Sanceler CM-G manufactured by Sanshin Chemical Industry Co., Ltd. (N-cyclohexyl-2-benzothiazolylsulfeneamide (CBS))

Vulcanization accelerator 2: Nocceler ZTC manufactured by Ouchi Shinko Chemical Industry Co., Ltd. (zinc dibenzyldithiocarbamate (ZDBzC))

Vulcanization accelerator 3: Perkacit DPG manufactured by Flexsys (1,3-diphenylguanidine)

(Examples and Comparative examples)

According to the compounding formulations shown in Table 1, using a 1.7 L closed Banbury mixer, all chemicals other than sulfur and vulcanization accelerators were kneaded until reaching a discharge temperature at 150°C to 160°C for 1 to 10 minutes to obtain a kneaded product. Next, using a twinscrew open roll, sulfur and vulcanization accelerators were added to the obtained kneaded product, and the mixture was kneaded for 4 minutes until the temperature reached 105°C to obtain an unvulcanized rubber composition. Each test tire was produced by extruding the obtained unvulcanized rubber composition into a shape of each of the inner tread rubber layer and the outer tread rubber layer (both having a thickness of 7.5 mm) with an extruder equipped with a mouthpiece having a predetermined shape to mold a composite of the outer tread layer and the inner tread layer, attaching the composite together with a base part (thickness: 1.5 mm) and other tire members to produce an unvulcanized tire, and press-vulcanizing the unvulcanized tire for 12 minutes under a condition at 170°C.

<Measurement of tan $\delta$A>

Each rubber specimen after vulcanization was cut out with length 20 mm $\times$ width 4 mm $\times$ thickness 1 mm from each rubber layer of a tread part of each test tire so that a tire circumferential direction becomes on a long side and a tire radial direction becomes a thickness direction. For each rubber specimen, using Eplexor series manufactured by gabo Systemtechnik GmbH, a loss tangent tan $\delta$ was measured at each temperature in 5°C increments from 0°C to 50°C, under a condition of a frequency of 10 Hz, an initial strain of 1%, and an amplitude of $\pm$ 0.1%. Then, an average value of the obtained 11 numerical values was defined as a tan $\delta$A. The results are shown in Tables 1 and 2.

<Grip performance during straight running>

The test tire was mounted on all wheels of a domestic FR car (2000 cc), and actual vehicle running with 10 laps was performed on a test course with a dry asphalt road surface. Test drivers sensory-evaluated stability of control when a brake was applied during running on a straight line at a speed of 100 km/h. The evaluations were performed using an integer value of 1 to 10 points, and based on evaluation criteria that the higher the score is, the better the stability of control during steering is, a total score by 10 test drivers was calculated. A total score of Comparative example 1 was converted into a reference value (100), and an evaluation result for each test tire was indicated as an index in proportion to the total score. The results show that the larger the numerical value is, the higher the initial grip performance is.

<Grip performance during cornering>

The test tire was mounted on all wheels of a domestic FR car (2000 cc), and actual vehicle running with 10 laps was performed on a test course with a dry asphalt road surface. Test drivers sensory-evaluated stability of control when a brake was applied and the car entered a corner during running on a straight line at a speed of 100 km/h. The evaluations were performed using an integer value of 1 to 10 points, and based on evaluation criteria that the higher the score is, the better the stability of control during steering is, a total score by 10 test drivers was calculated. A total score of Comparative example 1 was converted into a reference value (100), and an evaluation result for each test tire was indicated as an index in proportion to the total score. The results show that the larger the numerical value is, the higher the initial grip performance is.

Besides, a target performance value for a total performance of grip performance during straight running and grip performance during cornering (a sum of a grip performance index during straight running and a grip performance index during cornering) shall be over 200.

Table 1

| | Outer tread rubber la yer | | | | | | Inner tread r ubber layer | | | |
|---|---|---|---|---|---|---|---|---|---|---|
| | A1 | A2 | A3 | A4 | A5 | A6 | B1 | B2 | B3 | B4 |
| Compounding amount (part by mass) | | | | | | | | | | |
| NR | - | - | - | - | - | - | - | 20 | 20 | 30 |
| SBR1 (Rubber solid content) | 137.5 (100) | 137.5 (100) | 137.5 (100) | 137.5 (100) | 137.5 (100) | 137.5 (100) | - | - | - | - |
| SBR2 (Rubber solid content) | - | - | - | - | - | - | 150 (100) | 150 (70) | 150 (70) | 75 (50) |
| BR | - | - | - | - | - | - | - | 10 | 10 | 20 |
| Carbon black | 110 | 110 | 130 | 130 | 130 | 130 | 20 | 20 | 20 | 20 |
| Silica | - | - | - | - | - | - | 120 | 120 | 100 | 100 |
| Silane coupling agent | - | - | - | - | - | - | 12 | 12 | 10 | 10 |
| Resin component 1 | 15 | 30 | 50 | 70 | - | - | 60 | 60 | 30 | 20 |
| Resin component 2 | - | - | - | - | 70 | 70 | - | - | - | - |
| Oil | 20 | 40 | 40 | 40 | 40 | 10 | 10 | 10 | 10 | 10 |
| Liquid rubber | - | - | - | - | - | 50 | - | - | - | - |
| Zinc oxide | 2.0 | 2.0 | 2.0 | 2.0 | 2.0 | 2.0 | 2.0 | 2.0 | 2.0 | 2.0 |
| Stearic acid | 2.0 | 2.0 | 2.0 | 2.0 | 2.0 | 2.0 | 2.0 | 2.0 | 2.0 | 2.0 |
| Antioxidant | 2.0 | 2.0 | 2.0 | 2.0 | 2.0 | 2.0 | 2.0 | 2.0 | 2.0 | 2.0 |
| Wax | 2.0 | 2.0 | 2.0 | 2.0 | 2.0 | 2.0 | 2.0 | 2.0 | 2.0 | 2.0 |
| Sulfur | 1.5 | 1.5 | 1.5 | 1.5 | 1.5 | 1.5 | 1.5 | 1.5 | 1.5 | 1.5 |
| Vulcanization accelerator 1 | 2.0 | 2.0 | 2.0 | 2.0 | 2.0 | 2.0 | 2.0 | 2.0 | 2.0 | 2.0 |
| Vulcanization accelerator 2 | 1.0 | 1.0 | 1.0 | 1.0 | 1.0 | 1.0 | 1.0 | 1.0 | 1.0 | 1.0 |
| Vulcanization accelerator 3 | - | - | - | - | - | - | 2.0 | 2.0 | 2.0 | 2.0 |
| tan $\delta$A | 0.30 | 0.45 | 0.50 | 0.55 | 0.60 | 0.65 | 0.40 | 0.25 | 0.20 | 0.15 |

Table 2

| | Comparative example | | | | | | Example | | | | | | | | | |
|---|---|---|---|---|---|---|---|---|---|---|---|---|---|---|---|---|
| | 1 | 2 | 3 | 4 | 5 | 6 | 1 | 2 | 3 | 4 | 5 | 6 | 7 | 8 | 9 | 10 |
| Outer tread rubber layer | A1 | A1 | A2 | A1 | A2 | A1 | A2 | A2 | A3 | A4 | A2 | A5 | A6 | A6 | A6 | A2 |
| Inner tread rubber layer | B1 | B1 | B1 | B2 | B1 | B2 | B2 | B3 | B3 | B4 | B2 | B3 | B4 | B4 | B4 | B2 |
| $\tan \delta A_{out}$ | 0.30 | 0.30 ) | 0.45 | 0.30 | 0.45 | 0.30 | 0.45 | 0.45 | 0.50 | 0.55 | 0.45 | 0.60 | 0.65 | 0.65 | 0.65 | 0.45 |
| $\tan \delta A_{in}$ | 0.40 | 0.40 ) | 0.40 | 0.25 | 0.40 | 0.25 | 0.25 | 0.20 | 0.20 | 0.15 | 0.25 | 0.20 | 0.15 | 0.15 | 0.15 | 0.25 |
| $D/W_L$ | 0.60 | 0.40 ) | 0.40 | 0.40 | 0.60 | 0.60 | 0.60 | 0.60 | 0.60 | 0.60 | 0.80 | 0.80 | 0.80 | 0.80 | 0.80 | 0.60 |
| $\tan \delta A_{out} \times (D/W_L)$ | 0.18 | 0.12 | 0.18 | 0.12 | 0.27 | 0.18 | 0.27 | 0.27 | 0.30 | 0.33 | 0.36 | 0.48 | 0.52 | 0.52 | 0.52 | 0.27 |
| Groove area ratio (%) of grounding surface of outer tread rubber layer | 16 | 16 | 16 | 16 | 16 | 16 | 16 | 16 | 16 | 16 | 16 | 16 | 16 | 14 | 8 | 8 |
| Groove area ratio (%) of grounding surface of inner tread rubber layer | 4 | 4 | 4 | 4 | 4 | 4 | 4 | 4 | 4 | 4 | 4 | 4 | 4 | 6 | 12 | 12 |
| Index | | | | | | | | | | | | | | | | |
| Grip performance during straight running | 100 | 102 | 104 | 106 | 104 | 102 | 116 | 122 | 124 | 128 | 110 | 112 | 114 | 118 | 128 | 118 |
| Grip performance during cornering | 100 | 88 | 92 | 90 | 92 | 90 | 124 | 128 | 134 | 138 | 136 | 146 | 156 | 164 | 174 | 146 |
| Total performance | 200 | 190 | 196 | 196 | 196 | 192 | 240 | 250 | 258 | 266 | 246 | 258 | 270 | 282 | 302 | 264 |

EP 4 190 587 B1

From the results in Tables 1 and 2, it can be seen that, in the tire of the present invention, a total performance of grip performance during straight running and grip performance during cornering under high-speed running conditions is improved.

REFERENCE SIGNS LIST

1. Bead part
1a. Bead core
1b. Bead filler
2. Sidewall part
3. Tread part
4. Carcass layer
5. Land part
5a. Circumferential groove
6. Sidewall rubber
7. Rim strip rubber
50. Cap part
51. Base part
52. Inner tread rubber layer
53. Outer tread rubber layer

**Claims**

1. A tire having a tread part in which a mounting direction to a vehicle is designated,

   wherein the tread part has an inner tread rubber layer forming an end side inside the vehicle when the tire is mounted to the vehicle and an outer tread rubber layer forming an end side outside the vehicle when the tire is mounted to the vehicle,
   wherein a ratio of a distance D from a grounding end outside the vehicle to an interface between the inner tread rubber layer and the outer tread rubber layer with respect to a distance $W_L$ between a grounding end inside the vehicle and the grounding end outside the vehicle ($D/W_L$) is 0.50 or more,
   **characterised in that**
   an average value of a loss tangent tan $\delta$ at 0°C to 50°C of the inner tread rubber layer, measured under a condition of a frequency of 10 Hz, an initial strain of 1%, and an amplitude of $\pm$ 0.1%, is defined as tan $\delta A_{in}$, tan $\delta A_{in}$ is 0.30 or less, and
   wherein an average value of a loss tangent tan $\delta$ at 0°C to 50°C of the outer tread rubber layer, measured under a condition of a frequency of 10 Hz, an initial strain of 1%, and an amplitude of $\pm$ 0.1%, is defined as tan $\delta A_{out}$, tan $\delta A_{out}$ is 0.40 or more,
   wherein tan $\delta A_{out}$ and $D/W_L$ satisfy the following inequality (1):

$$\text{Inequality (1):} \qquad \tan \delta A_{out} \times (D/W_L) \geq 0.30,$$

   wherein the "tan $\delta A$" is obtained by measuring a tan $\delta$ at each temperature from 0°C to 50°C in 5°C increments under a condition of a frequency of 10 Hz, an initial strain of 1%, and an amplitude of $\pm$ 0.1%, and calculating an average value of numerical values obtained, wherein a sample for tan $\delta A$ measurement is a vulcanized rubber composition with 20 mm in length $\times$ 4 mm in width $\times$ 1 mm in thickness, when it is produced by being cut out from a tire, it is cut out from a tread part of the tire so that a tire circumferential direction becomes a long side and a tire radial direction becomes a thickness direction.

2. The tire of claim 1, wherein a rubber composition of the outer tread rubber layer comprises 100 parts by mass or more of carbon black based on 100 parts by mass of a rubber component.

3. The tire of claim 1 or 2, wherein the rubber composition of the outer tread rubber layer comprises 70 parts by mass or more of a softening agent based on 100 parts by mass of the rubber component.

4. The tire of any one of claims 1 to 3, wherein the rubber composition of the outer tread rubber layer comprises an aromatic-based petroleum resin.

5. The tire of any one of claims 1 to 4, wherein a rubber composition of the inner tread rubber layer comprises 40 parts by mass or more of silica based on 100 parts by mass of the rubber component.

6. The tire of any one of claims 1 to 5, wherein a groove area ratio of a grounding surface of the outer tread rubber layer is smaller than a groove area ratio of a grounding surface of the inner tread rubber layer.

7. The tire of any one of claims 1 to 6, wherein a difference between the groove area ratio of the grounding surface of the outer tread rubber layer and the groove area ratio of the grounding surface of the inner tread rubber layer is 2% or more and 10% or less.

**Patentansprüche**

1. Reifen, der einen Laufstreifenteil aufweist, in dem eine Montagerichtung an einem Fahrzeug gekennzeichnet ist,

   wobei der Laufstreifenteil eine innere Laufstreifenkautschukschicht, die eine Endseite innerhalb des Fahrzeugs bildet, wenn der Reifen an dem Fahrzeug montiert ist, und eine äußere Laufstreifenkautschukschicht, die eine Endseite außerhalb des Fahrzeugs bildet, wenn der Reifen an dem Fahrzeug montiert ist, aufweist,
   wobei ein Anteil eines Abstands D von einem Bodenkontakt-Ende außerhalb des Fahrzeugs zu einer Grenzfläche zwischen der inneren Laufstreifenkautschukschicht und der äußeren Laufstreifenkautschukschicht in Bezug auf einen Abstand $W_L$ zwischen einem Bodenkontakt-Ende innerhalb des Fahrzeugs und dem Bodenkontakt-Ende außerhalb des Fahrzeugs (D/$W_L$) 0,50 oder mehr beträgt,
   **dadurch gekennzeichnet, dass** ein Mittelwert eines Verlusttangens tan $\delta$ bei 0°C bis 50°C der inneren Laufstreifenkautschukschicht, gemessen unter Bedingungen einer Frequenz von 10 Hz, einer anfänglichen Dehnung von 1% und einer Amplitude von $\pm$0,1%, als tan $\delta A_{in}$ definiert ist, tan $\delta A_{in}$ 0,30 oder weniger beträgt, und
   wobei ein Mittelwert eines Verlusttangens bei 0°C bis 50°C der äußeren Laufstreifenkautschukschicht, gemessen unter Bedingungen einer Frequenz von 10 Hz, einer anfänglichen Dehnung von 1% und einer Amplitude von $\pm$0,1%, als tan $\delta A_{out}$ definiert ist, $\delta A_{out}$ 0,40 oder mehr beträgt,
   wobei tan $\delta A_{out}$ und D/$W_L$ der folgenden Ungleichung (1) genügen:

$$\text{Ungleichung (1):} \quad \tan \delta A_{out} \times (D/W_L) \geq 0{,}30,$$

   wobei der "tan $\delta A$" erhalten ist durch Messen eines tan $\delta$ bei jeder Temperatur von 0°C bis 50°C in 5°C-Schritten unter Bedingungen einer Frequenz von 10 Hz, einer anfänglichen Dehnung von 1% und einer Amplitude von $\pm$0,1%, und Berechnen eines Mittelwertes von erhaltenen Zahlenwerten, wobei eine Probe zur tan $\delta A$-Messung eine vulkanisierte Kautschukzusammensetzung mit 20 mm Länge $\times$ 4 mm Breite $\times$ 1 mm Dicke ist, wenn sie durch Herausschneiden aus einem Reifen hergestellt ist, sie aus einem Laufstreifenteil des Reifens so herausgeschnitten ist, dass eine Reifenumfangsrichtung eine Längsseite wird und eine Reifenradialrichtung eine Dickenrichtung wird.

2. Reifen nach Anspruch 1, wobei eine Kautschukzusammensetzung der äußeren Laufstreifenkautschukschicht 100 Massenteile oder mehr an Ruß umfasst, bezogen auf 100 Massenteile einer Kautschukkomponente.

3. Reifen nach Anspruch 1 oder 2, wobei die Kautschukzusammensetzung der äußeren Laufstreifenkautschukschicht 70 Massenteile oder mehr eines Weichmachers umfasst, bezogen auf 100 Massenteile der Kautschukkomponente.

4. Reifen nach einem der Ansprüche 1 bis 3, wobei die Kautschukzusammensetzung der äußeren Laufstreifenkautschukschicht ein Aromaten-basiertes Petrolharz umfasst.

5. Reifen nach einem der Ansprüche 1 bis 4, wobei eine Kautschukzusammensetzung der inneren Laufstreifenkautschukschicht 40 Massenteile oder mehr an Siliciumdioxid umfasst, bezogen auf 100 Massenteile der Kautschukkomponente.

6. Reifen nach einem der Ansprüche 1 bis 5, wobei ein Rillenflächen-Anteil einer Bodenkontaktoberfläche der äußeren Laufstreifenkautschukschicht kleiner ist als ein Rillenflächen-Anteil einer Bodenkontaktoberfläche der inneren Laufstreifenkautschukschicht.

**7.** Reifen nach einem der Ansprüche 1 bis 6, wobei eine Differenz zwischen dem Rillenflächen-Anteil der Bodenkontaktoberfläche der äußeren Laufstreifenkautschukschicht und dem Rillenflächenanteil der Bodenkontaktoberfläche der inneren Laufstreifenkautschukschicht 2% oder mehr und 10% oder weniger beträgt.

**Revendications**

**1.** Pneumatique ayant une partie formant bande de roulement dans laquelle une direction de montage sur un véhicule est spécifiée,

dans lequel la partie formant bande de roulement a une couche de caoutchouc de bande de roulement intérieure formant un côté d'extrémité à l'intérieur du véhicule quand le pneumatique est monté sur le véhicule, et une couche de caoutchouc de bande de roulement extérieure formant un côté d'extrémité à l'extérieur du véhicule quand le pneumatique est monté sur le véhicule,
dans lequel un rapport d'une distance D depuis une extrémité de contact au sol à l'extérieur du véhicule jusqu'à une interface entre la couche de caoutchouc de bande de roulement intérieure et la couche de caoutchouc de bande de roulement extérieure, sur une distance $W_L$ entre une extrémité de contact au sol à l'intérieur du véhicule et l'extrémité de contact au sol à l'extérieur du véhicule ($D/W_L$) est de 0,50 ou plus,
**caractérisé en ce que**
une valeur moyenne d'une tangente de perte tan $\delta$ à 0 °C jusqu'à 50 °C de la couche de caoutchouc de bande de roulement intérieure, mesurée sous une condition d'une fréquence de 10 Hz, d'une contrainte initiale de 1 %, et d'une amplitude de $\pm$ 0,1 %, est définie comme tan $\delta A_{in}$, tan $\delta A_{in}$ étant de 0,30 ou moins, et
dans lequel une valeur moyenne d'une tangente de perte tan $\delta$ à 0 °C jusqu'à 50 °C de la couche de caoutchouc de bande de roulement extérieure, mesurée sous une condition d'une fréquence de 10 Hz, d'une contrainte initiale de 1 %, et d'une amplitude de $\pm$ 0,1 %, est définie comme tan $\delta A_{out}$, tan $\delta A_{out}$ étant de 0,40 ou plus,
dans lequel $\delta A_{out}$ et $D/W_L$ satisfont à l'inégalité (1) suivante :

$$\text{inégalité (1)}: \quad \tan \delta A_{out} \times (D/W_L) \geq 0,30,$$

dans lequel la valeur « tan $\delta A$ » est obtenue en mesurant une valeur tan $\delta$ à chaque température depuis 0° à 50 °C par incréments de 5 °C sous une condition d'une fréquence de 10 Hz, d'une contrainte initiale de 1 %, et d'une amplitude de $\pm$ 0,1 %, et en calculant une valeur moyenne de valeurs numériques obtenues, dans lequel un échantillon pour un mesurage de tan $\delta A$ est une composition de caoutchouc vulcanisé présentant 20 mm de longueur $\times$ 4 mm de largeur $\times$ 1 mm d'épaisseur, quand il est produit en étant découpé à partir d'un pneumatique, il est découpé à partir d'une partie formant bande de roulement du pneumatique de telle sorte qu'une direction circonférentielle du pneumatique devient un côté long et qu'une direction radiale du pneumatique devient une direction d'épaisseur.

**2.** Pneumatique selon la revendication 1, dans lequel une composition de caoutchouc de la couche de caoutchouc de bande de roulement extérieure comprend 100 parts en masse ou plus de noir de carbone sur la base de 100 parts en masse d'un composant de caoutchouc.

**3.** Pneumatique selon la revendication 1 ou 2, dans lequel la composition de caoutchouc de la couche de caoutchouc de bande de roulement extérieure comprend 70 parts en masse ou plus d'un agent ramollissant sur la base de 100 parts en masse du composant de caoutchouc.

**4.** Pneumatique selon l'une quelconque des revendications 1 à 3, dans lequel la composition de caoutchouc de la couche de caoutchouc de bande de roulement extérieure comprend une résine de pétrole à base aromatique.

**5.** Pneumatique selon l'une quelconque des revendications 1 à 4, dans lequel la composition de caoutchouc de la couche de caoutchouc de bande de roulement intérieure comprend 40 parts en masse ou plus de silice sur la base de 100 parts en masse du composant de caoutchouc.

**6.** Pneumatique selon l'une quelconque des revendications 1 à 5, dans lequel un rapport d'aire de rainure d'une surface de contact au sol de la couche de caoutchouc de bande de roulement extérieure est inférieur à un rapport d'aire de rainure d'une surface de contact au sol de la couche de caoutchouc de bande de roulement intérieure.

7. Pneumatique selon l'une quelconque des revendications 1 à 6, dans lequel une différence entre le rapport d'aire de rainure de la surface de contact au sol de la couche de caoutchouc de bande de roulement extérieur et le rapport d'aire de rainure de la surface de contact au sol de la couche de caoutchouc de bande de roulement intérieure est de 2 % ou plus et de 10 % ou moins.

# FIG. 1

**EP 4 190 587 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012158662 A
- EP 2452834 A
- GB 1588575 A
- US 2005034797 A
- US 2011094639 A